# EUROPEAN PATENT APPLICATION

(11) **EP 2 251 129 A1**
(43) Date of publication of application: **17.11.2010**
(21) Application number: 09160120.3
(22) Date of filing: 13.05.2009
(51) Int. Cl.: B23D 47/08

(54) **Apparatus for Cutting Wooden Elements**

(71) Applicant: System TM A/S, 8300 Odder (DK)
(72) Inventor: Christensen, Erik Kingo, DK-8300, Odder (DK); Jacobsen, Håkon Nedergaard, DK-8300, Odder (DK); Mortensen, Lars Krüger, DK-5690, Tommerup (DK); Olesen, Thomas Høeg, DK-8600, Silkeborg (DK)
(74) Representative: Plougmann & Vingtoft A/S

(57) **Abstract**

The invention relates to an apparatus for cutting wooden elements. The apparatus is provided with a mechanism resulting in a must faster cutting than previous apparatuses for cutting wooden elements. Thus, a decrease is obtained in time spent for cutting, and thus an increase in efficiency and capacity. The invention also relates to a use of a mechanism for an apparatus for cutting wooden elements and to a method for cutting the wooden elements.

## Description

### FIELD OF THE INVENTION

The invention relates to an apparatus for cutting of wooden elements. The apparatus comprises a support surface for the wooden elements. The support surface is adapted for displacing the wooden elements from one side of the apparatus to another side of the apparatus. The apparatus furthermore comprises a circular saw blade, said saw blade having a cutting plane being oblique to the support surface, preferably being perpendicular to the support surface. The invention also relates to use of such apparatus and to the use of a mechanism for displacing the saw blade. Furthermore, the invention relates to e method for cutting wooden element by means of an apparatus according to the invention.

### BACKGROUND OF THE INVENTION

US 4,510,835 discloses an apparatus for cutting wooden elements. The apparatus includes a base carrying an elongated slide plate having a longitudinal slot adjacent one end. An indexing assembly is disposed between the base and the elongated slide plate and engages within the slot of the slide plate to constrain one of its ends to longitudinal movement, and a crank rotatably connects the base to the medial portion of the slide plate. A first motor is mounted on the other end of the slide plate to rotatably support the blade, and a second motor may be carried by the base for rotating the crank to move the slide plate from side to side and up and down along the slot and thereby move the saw blade along an elliptical path.; In operation, the second motor turns the crank to cause the blade to be brought into contact with the workpiece along a path generally parallel with a major axis of the elliptical path. The movement of the machinery elements is a combination of longitudinal movement and rotary movement which result in high accelerations and decelerations. Longitudinal movement in a slot reduces speed of operation and can educe durability and functional reliability of the machinery elements.

### SUMMARY OF THE INVENTION

It may be seen as an object of the invention to provide an apparatus and a working method of such which is capable of cutting wooden elements in an efficient and sufficient manner without impeding the cutting speed, but on the other hand improving cutting speed. It may also be seen as an object of the invention to improve the durability of fast-moving machinery elements. It may further be seen as an object to reduce the cost of manufacture and/or of maintenance and/or of operation of an apparatus for cutting wooden elements.

One or more of the objects of the invention may be accomplished by an apparatus with a said saw blade being displaceable from the first position to the second position and vice versa by a displacement mechanism, said mechanism comprising
- an axle for the saw blade, said axle for the saw blade mounted rotatably relative to a rotor of the apparatus, an axle for the rotor, said axle for the rotor mounted rotatably relative to a chassis of the apparatus, where
- said axle for the saw blade is arranged substantially parallel to said axle for the rotor, and where said axle for the saw blade is mounted for performing a planetary movement around the axle for the rotor.

An apparatus for cutting wooden element must be operating fast. By operating the saw blade purely by rotational movement, and not incorporating any translational movement result in the operation of the saw blade being faster. The speed of some cutting processes, when cutting wooden elements, has been reduced by at least 25%, e.g. from a time for cutting of 0.120 second to 0.080 seconds. The speed of cutting and thus the time spend when cutting is dependent on the height and the width of the wooden element being cut.

Therefore, when using an apparatus according to the invention, and when using a mechanism as stated in an apparatus for cutting wooden elements, the speed of cutting and thus the time spend for cutting may be reduced more or less compared to known cutting of wooden elements.

However, by operating an apparatus for cutting wooden element fast, there is a risk that the wooden chips resulting for the cutting will clog up between the teeth of the saw blade, thus reducing or even inhibiting further cutting.

Another advantage obtained by the apparatus according to the invention is that when cutting wooden elements, clogging of the teeth of the saw blade is limited or even eliminated. This is due to the fact that each teeth of the saw blade is engaging the wooden element within a shorter period of time than apparatuses according to prior art. The effect is especially profound when the rotation of the saw blade is the same, i.e. clockwise or counter-clockwise, as the rotor.

In a preferred embodiment of the apparatus according to the invention, the rotor constitutes a circular element, and where the circular element has a centre along a longitudinal axis of the axle of the rotor and where the rotor has an outer circumference surrounding the axle of the saw blade so that a section of the axle of the saw blade extending within the rotor lies within the outer circumference of the rotor.

The rotor having an outer circumference surrounding the axle of the saw blade has the advantage that axles and especially bearing are protected form saw dust from the cutting of the wooden elements. Also, the planetary movement is accomplished in a manner reducing the number of machinery elements to the minimum, thus increasing durability and reliability of the apparatus.

Preferably, the axle for the saw blade is driven by a motor along a belt drive, and also the axle of the rotor is driven by a motor along a belt drive. Belt drives are drive mechanisms being easy to adjust to a correct tensioning of the belts. Furthermore, belt drives are drive mechanisms with a reduced noise level compared to other drives such as chain drives and gear drives.

In an embodiment of the apparatus according to the invention, the axle of the saw blade is provided with a gear wheel, and the axle of the rotor is also provided with a gear wheel, said gear wheel of the rotor intermeshing with the gear wheel of the saw blade so that said saw blade is capable of a planetary or orbital movement around the gear wheel of the rotor.

A gear wheel drive is a drive mechanism being capable of transferring large forces and torques which may be necessary in the apparatus according to the invention, where the saw blade is rotating at high speed and where cutting of the wooden elements, especially wooden element made from hard wood such as oak and such as many of the wooden species form the tropics, i.e. form Southeast of Asia, from Africa and from South America. Also, the speed of operation as mentioned above results in the cutting taking place very fast, not leaving time for the saw blade to 'gently' cutting through the wooden element - cutting is more 'rough'.

Preferably, the axle of rotor is driven by a motor being adapted for individual control, so that the planetary movement of the saw blade may be provided individually and separately from operation of other elements of the apparatus, at selected period of time depending on the cutting of the wooden elements.

Separate driving of the drive motor for the rotor results in driving taking place at any desired time interval during cutting, at any desired speed and at any desired acceleration and deceleration of the saw blade when the saw blade starts from the first position, enters into the second position and returns to the first position.

In a possible embodiment of the apparatus according to the invention, a distance in a plane parallel with the plane of the saw blade between the rotational axis of the axle of the saw blade and the axle of the rotor, respectively is at least 30 mm, preferably between 30 mm and 120 mm, possibly between 40 mm and 100 mm, even possibly between 40 mm and 80 mm, or in the alternative possibly between 60 mm and 120 mm, even possibly between 80 mm and 120 mm.

In the possible embodiment of the apparatus according to the invention, the apparatus is adapted for cutting wooden elements having a cross-sectional area with a width between 20 mm and 500 mm and a height between 5 mm and 125 mm.

Apart from applying different distances in a plane parallel with the plane of the saw blade between the rotational axis of the axle of the saw blade and the axle of the rotor, it will additionally be possible to use saw blade with different diameters. Especially if the distance is relatively high, it will be possible to use saw blades having a relatively larger diameter compared to saw blades capable of being used, if the distance is relatively low. A combination of a relatively large distance such as 120 mm and a relatively large diamete4r saw blade such as 700 mm makes it possible to cut wooden elements with a large width or a large height.

In a preferred embodiment of an apparatus according to the invention, the support surface is provided with an aperture, said aperture being adopted for allowing the saw blade to move from the first position to the second position, said second position being a position for cutting the wooden elements on the support surface.

Preferably, the entire saw blade is positioned below the support surface when being in the first position, and a major part of the saw blade also being positioned below the support surface when being in the second position. Accordingly, the support surface is provided with an aperture for at least part of the saw blade passing though the support surface during cutting of the wooden element, because cutting takes place from the support surface and upwards through the support surface.

In an alternative embodiment, the entire saw blade is positioned above the support surface when being in the first position, and the entire saw blade also being positioned above the support surface when being in the second position. Accordingly, the support surface need not an aperture, because cutting of the wooden element takes place from above and downwards towards the support surface.

### BRIEF DESCRIPTION OF THE INVENTION

The invention will hereafter be described with reference to the drawings, where
Fig. 1 is a sketch showing cutting of a wooden element by saw blade such as a saw blade of an apparatus according to the invention,
Fig. 2 is a photograph showing a possible embodiment according to the invention of the apparatus for cutting wooden element,
Fig. 3 is a photograph showing a first close-up of a support surface and drive rollers of the apparatus shown in Fig. 2,
Fig. 4 is a photograph showing a second close-up of a support surface and drive rollers of the apparatus shown in Fig. 2,
Fig. 5 is a drawing showing an embodiment of the apparatus according to the invention, seen in a plane parallel to the saw blade, and
Fig. 6 is a drawing showing an embodiment of the apparatus according to the invention, seen in a plane perpendicular to the saw blade.

### DETAILED DESCRIPTION OF THE INVENTION

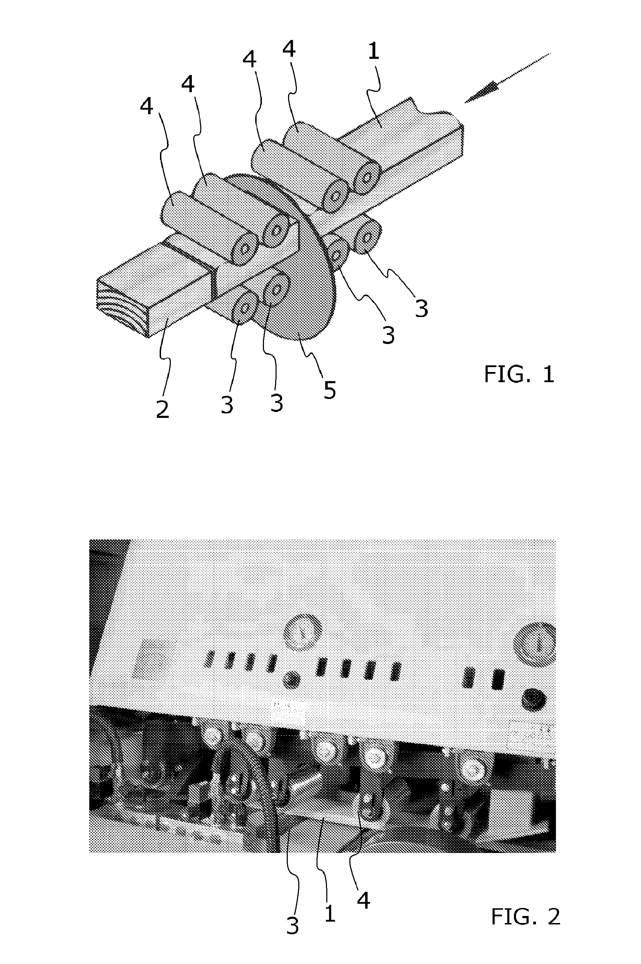

Fig. 1 is a perspective view of a cutting method for cutting wooden elements on an apparatus according to the invention. The wooden element 1 is a longitudinal stave intended for being cut into a plurality of shorter staves 2. The cutting is performed by the wooden element 1 being passed through means for displacing the wooden element such as lower drive rollers 3 as shown in the figure. Other means for displacing the wooden element may be used, such as drive belts, drive sprocket, or other machine elements suited for displacing the longitudinal wooden element. Upper rollers 4 are intended for holding the wooden element in contact with lower drive rollers 3. The upper rollers 4 may or may not be drive rollers. Alternatively, the upper rollers 4 may be the drive rollers and the lower rollers 3 may or may not be driven. In still an alternative embodiment, the lower rollers 3 and the upper rollers 4 are both set of non-driven rollers, and displacement of the wooden element is performed by any another means suited therefore.

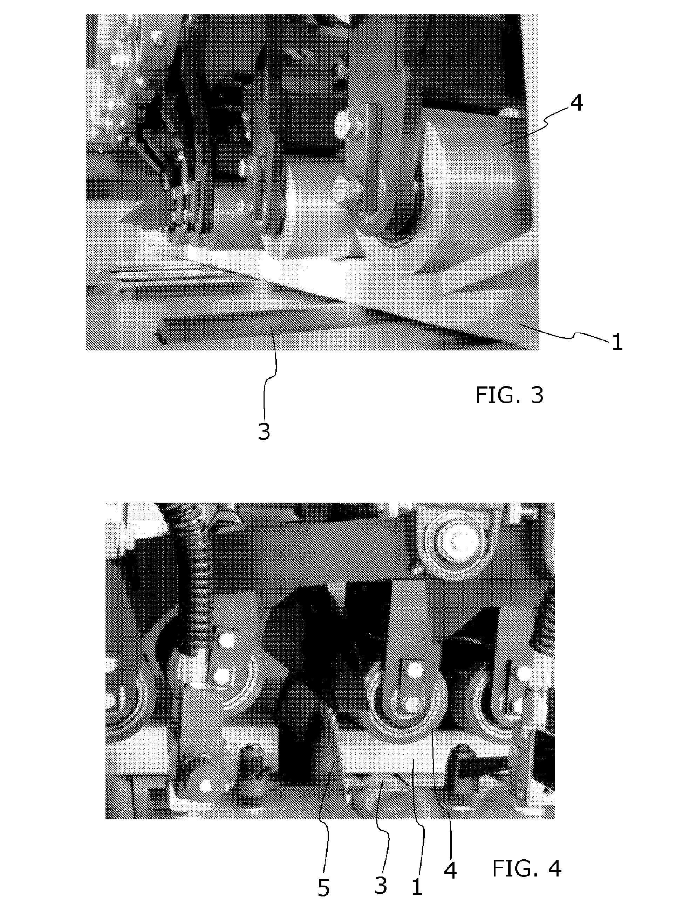

During displacement of the wooden element 1, the element is stopped shortly by means of the lower drive rollers 3 and the upper rollers being stopped. During the stop, a circular rotating saw blade 5 is passed through the wooden element 1, thus cutting the wooden element along a cut being perpendicular to the longitudinal direction and perpendicular to the displacement direction, as shown by the arrow, of the wooden element. Cuts other than perpendicular may in some cases be provided, however, wooden elements being cut are often used as parquet blocks, floor boards or other wooden element to be used with an end surface being perpendicular to the longitudinal extension of the wooden element. Fig. 2 shows an apparatus comprising a support surface consisting in bottom drive rollers 3 (see also Fig. 3 and Fig. 4) and also comprising upper rollers 4 for holding the wooden element 1 in contact with the lower drive rollers 3. Fig. 3 is a close up view showing the wooden element 1, the support surface constituted by the lower drive rollers 3 and also showing the upper rollers 4. The lower drive rollers 3 are intended for displacing the wooden element 1 in a direction tangentially to the rollers 3,4, in the figures in a direction from right to left. The speed of displacement may be as high as 500 m/min corresponding to approximately 8.5 m/sec. The drive rollers 3 are driven in a manner where the wooden element 1 is alternately driven and stopped. The wooden element 1 is stopped each time the wooden element 1 is to be cut by the saw blade 5 (see Fig. 4).

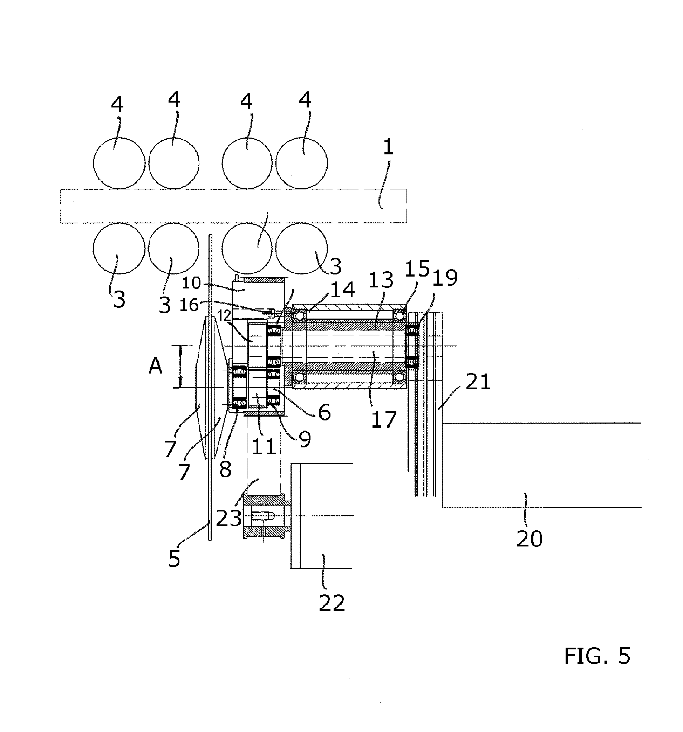

Fig. 4 shows cutting of the wooden element 1 at selected intervals along the longitudinal extension of the wooden element 1. Cutting is performed by the saw blade 5 being moved from a first retracted position underneath the support surface (se Fig. 5) to a second projecting position, as shown in Fig. 4, where at least part of the saw blade 5 extends above the support surface. Fig. 4 shows the saw blade 5 being projected to a position where the wooden element 1 is completely cut through. The saw blade 5 is moved from the first retracted position to the second projected position within a very short time interval. The time interval must be small in order not to slow down to much the cutting of the wooden element 1 into more blocks, staves or other smaller elements. Fast cutting of the wooden element 1 is an essential parameter in order to obtain a sufficiently and satisfactory high cutting capacity of the apparatus.

Fig. 5 is a plane view of a drive mechanism of an apparatus according to the invention. Apart from a mechanism for driving the saw blade, the support surface consisting of drive rollers 3 are shown, the upper rollers 4 are shown and the wooden element 1 is shown schematically. Also the saw blade 5 is shown in the first retracted position.

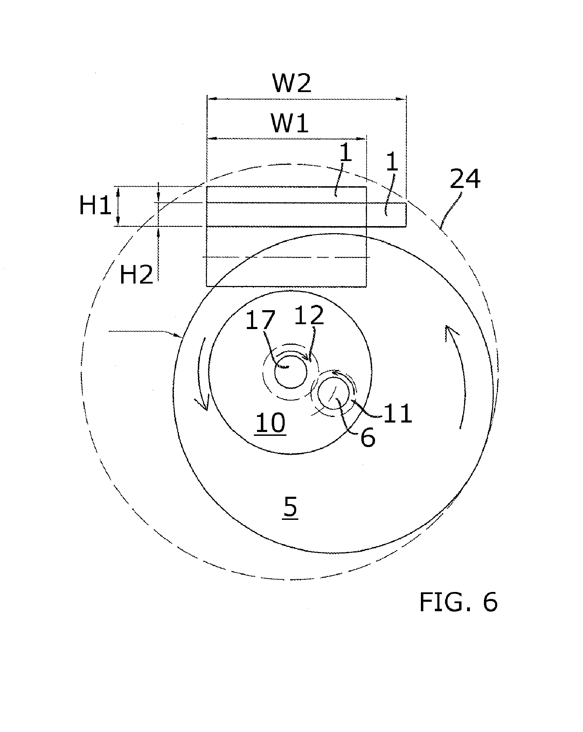

The mechanism comprises an axle 6 for the saw blade 5. The saw blade 5 is secured to the axle by means of clamping elements 7. The saw blade axle 6 is supported in inner rings of a first set of angular contact ball bearings 8,9. Other types of bearings may be utilised in stead. The outer rings of the first set of angular contact ball bearings 8,9 are supported in a rotor 10. The saw blade axle 6 is further provided with a gear wheel 10 mounted on the saw blade axle 6 between the angular contact ball bearings 8,9. The gear wheel 11 is intermeshing with a corresponding gear wheel 12, also shown schematically in Fig. 6.

As mentioned, the mechanism furthermore comprises a rotor 10. The rotor 10 comprises an axle 13 supported in inner rings of a set of circular ball bearings 14,15. Other types of bearings may be utilised in stead. The outer rings of the set of circular ball bearings 14,15 are supported on a chassis 16 of the apparatus. The rotor axle 13 is secured to the rotor as such by one or more bolts 16. Other means for securing the rotor axle 13 to the rotor 10 may be used such as groove and tongue.

A drive shaft 17 for the saw blade 5 extends through the rotor axle 13. The drive shaft 17 for the saw blade 5 is supported in inner rings of a second set of angular contact roller bearings 18,19. Outer rings of the second set of angular contact roller bearings 18,19 are supported by the rotor axle 13. The rotor axle 13 is hollow, allowing the drive shaft 16 for the saw blade 5 to extend there-through.

The drive shaft 17 for the saw blade 5 is provided with the gear wheel 11 mounted on the drive shaft 17 on the left of the one angular contact roller bearing 18. Other types of bearings may be utilised in stead. The gear wheel 12 is intermeshing with the gear wheel 11 of the saw blade axle 6, also shown schematically in Fig. 6. A first drive motor 20 is provided for driving the drive shaft 17 for the saw blade 5 and thus driving the saw blade 5 along the gear wheels 6,12. The first drive motor 20 is driving the drive shaft 17 of the saw blade 5 along one or more belts 21. Other means of transfer than belts may be provided, either gear wheels, chain drive or the drive shaft of the saw blade being the drive shaft of the motor, i.e. a direct drive of the drive shaft.

A second drive motor 22 is provided for driving the rotor 10 and thus driving the saw blade 5 along a planetary or orbital path (see Fig. 6). The second drive motor 22 is driving the rotor 10 along one or more belts 23. Other means of transfer than belts may be provided, either gear wheels, chain drive or the drive shaft of the saw blade being the drive shaft of the motor, i.e. a direct drive of the drive shaft.

During operation of the apparatus, the first drive motor 20 and the second drive motor 22 are each operated individually and separately from each other.

The first drive motor 20 is preferably driven continuously in order for the saw blade 5 to be ready for cutting the wooden elements 1 at any time during passing of wooden element 1 along the support surface, see Fig. 1 and Fig. 4. Thus, the saw blade 5 is rotating continuously around the saw blade axle 6, driven by the first drive motor 20 along the belts 21, along the drive shaft 17 for the saw blade 5, and along the gear wheels 11,12. Rotation of the saw blade 5 is independent from any rotation of the rotor 10. Thus, the saw blade 5 is preferably rotating both when being in the first retracted position as shown in Fig. 5 and when being in the second projected position (see Fig. 1 and Fig. 4).

The second drive motor 22 is only driven when the saw blade 5 is to be displaced from the first retracted position to the second projected position, and vice versa. The second drive motor 22 is preferably a stepper motor or a servo motor. The second drive motor 22, when operated, will provide the rotor 10 with one full rotation, i.e. 360 degrees rotation, around the rotor axle 13, driven by the second drive motor 22 along the belt 23. Rotation of the rotor 10 around the rotor axle 13 is performed independently from rotation of saw blade 5 around the saw blade axle 6. Thus, the rotor 10 is rotating only when the saw blade 5 is to be displaced from the first retracted position to the second projected position.

Rotation of the rotor 10 around the rotor axle 13 is preferably a continuous rotation. Thus, the rotation speed is not limited neither when the saw blade starts cutting the wooden element, nor during the further cutting of the wooden element. A continuous rotation of the rotor and thus a planetary or orbital movement of the saw blade around the rotor axle results in a cutting of the wooden element having both a component along the height of the wooden element and a component along the width of the wooden element.

Also, a continuous rotation of the rotor will result in the planetary or orbital movement of the saw blade possibly having a maximum speed during cutting of the wooden element, with no change of acceleration direction during cutting of the wooden element, i.e. no change of acceleration from upwards to downwards during cutting of the wooden element.

Fig. 6 is a plane view of the planetary or orbital movement of the saw blade 5 around the rotor axle 13. The saw blade axle 6 is shown rotating counter-clockwise, driven along the gear wheels 11,12 by the drive shaft 17 for the saw blade rotating clock-wise. In the figure, the saw blade 5 is shown by full lines in the first retracted position.

When the saw blade 5 is to be moved from the first retracted position to the second projected position and back to the first retracted position, the rotor 10 is driven by the second drive motor 22. In the embodiment shown, the rotor 10 is rotated counter-clockwise, thereby bringing the saw blade into the second projected position faster than if the rotor were rotated clock-wise. However, this is because the saw blade axle in the first retracted position is in a position right to the rotor axle. If the saw blade axle would have been in a position left to the rotor axle, the rotor would have to be rotated clockwise to bring the saw blade into the second projected position as fast as possible.

The apparatus gives the opportunity to select the rotational direction of the saw blade independently on the rotational direction of the rotor, and thereby adjusting, optimising or controlling the saw blade operation.

If the rotational direction of the saw blade is the same as the rotational direction of the rotor, the saw blade is said to be cutting "with" the rotor. Same rotational direction of the saw blade and of the rotor may result in chips, which are formed during cutting, being expelled from the cutting area more efficiently than if the rotational direction of the saw blade and the rotor were opposite each other.

Furthermore, same rotational direction of the saw blade and of the rotor, i.e. when the saw blade is said to be cutting "with" the rotor, result in the torque needed of the rotor motor for rotating the rotor being limited compared to when the rotational direction of the saw blade and of the rotor are the opposite.

Selecting the rotational direction of the saw blade, either the same as or the opposite as the rotational direction of the rotor, gives the opportunity to select a cutting process which is optimised in relation to obtaining a certain surface quality of the end surface of the wooden element being cut. The surface quality may be the roughness or the extend of possible burrs along one or more edges of the end surface, thus possibly limiting or eliminating burrs along one or more edges which will be visible during end use of the wooden element, e.g. as a parquet flooring.

The dotted line 24 shows the circle which an outer periphery of the saw blade 5 will pass when the rotor 10 is rotated a full rotation, i.e. 360 degrees. In the embodiment shown, the outer periphery of the saw blade 5 will make a pass enabling cutting of wooden elements having a width between W1 and W2 and having a height between H1 and H2.

In a possible embodiment, the saw blade has a diameter of approximately 400 mm. An axial displacement A (see Fig. 5) between a centre of the saw blade axle 6 and a centre of the rotor axle 13 is approximately 60 mm. In such embodiment, the outer periphery of the saw blade 5 will pass along a circle enabling cutting of wooden elements either having a width W1 of approximately 200 mm and a height H1 of approximately 50 mm, or enabling cutting of wooden elements having a width W2 of approximately 250 mm and a height H2 of approximately 30 mm. Wooden elements having widths and heights proportional hereto may also be cut by the specific embodiment described.

## Claims

1. An apparatus for cutting of wooden elements,
- said apparatus comprising a support surface for the wooden elements, said support surface being adapted for displacing the wooden elements from one side of the apparatus to another side of the apparatus, and
- said apparatus furthermore comprising a circular saw blade, said saw blade having a cutting plane being oblique to the support surface, preferably being perpendicular to the support surface, and
- said saw blade being displaceable between a first position where the saw blade is not capable of cutting the wooden element on the support surface to a second position where the saw blade is capable of cutting the wooden element on the support surface,
- said saw blade being displaceable from the first position to the second position and vice versa by a displacement mechanism, said mechanism comprising
- an axle (6) for the saw blade, said axle for the saw blade mounted rotatably relative to a rotor of the apparatus, an axle (13) for the rotor, said axle (13) for the rotor mounted rotatably relative to a chassis of the apparatus, where
- said axle (6) for the saw blade is arranged substantially parallel to said axle (13) for the rotor, and where said axle (6) for the saw blade is mounted for performing a planetary movement around the axle (13) for the rotor.

2. An apparatus according to claim 1, where the rotor constitutes a circular element, and where the circular element has a centre along a longitudinal axis of the axle of the rotor and where the rotor has an outer circumference surrounding the axle of the saw blade so that a section of the axle of the saw blade extending within the rotor lies within the outer circumference of the rotor.

3. An apparatus according to claim 1 or claim 2, where the axle for the saw blade is driven by a motor along a belt drive, and where also the axle of the rotor is driven by a motor along a belt drive.

4. An apparatus according to any of the preceding claims, where the axle of the saw blade is provided with a gear wheel, and where the axle of the rotor also is provided with a gear wheel, said gear wheel of the rotor intermeshing with the gear wheel of the saw blade so that said saw blade is capable of a planetary movement around the gear wheel of the rotor.

5. Apparatus according to any of the preceding claims, wherein the axle of the saw blade is driven by a motor being adapted for individual control, so that the planetary movement of the saw blade may be provided individually and separately from operation of other elements of the apparatus, at selected period of time depending on the cutting of the wooden elements.

6. Apparatus according to any of the preceding claims, where the saw blade has a diameter of between 200 mm and 1000 mm, possibly between 200 mm and 800 mm, even possibly between 300 mm and 600 mm, possibly 400 mm.

7. Apparatus according to any of the preceding claims, where a distance in a plane parallel with the plane of the saw blade between the rotational axis of the axle of the saw blade and the axle of the rotor, respectively is at least 30 mm, preferably between 30 mm and 120 mm, possibly between 40 mm and 100 mm, even possibly between 40 mm and 80 mm, or in the alternative possibly between 60 mm and 120 mm, even possibly between 80 mm and 120 mm.

8. Apparatus according to any of the preceding claims where the apparatus is adapted for cutting wooden elements having a cross-sectional area with a width between 20 mm and 500 mm and a height between 5 mm and 125 mm.

9. Apparatus according to any of the preceding claims where the support surface is provided with an aperture, said aperture being adopted for allowing the saw blade to move from the first position to the second position, said second position being a position for cutting the wooden elements on the support surface.

10. Use of an apparatus according to any of claims 1-9 for cutting wooden elements, preferably for cutting wooden element having a longitude significantly greater than a width and/or a height, preferably a longitude at least 10 times greater than a width and/or a height, of the wooden elements.

11. Use for an apparatus for cutting wooden elements of a mechanism comprising
- an axle for the saw blade, said axle for the saw blade mounted rotatably relative to a rotor of the apparatus, an axle for the rotor, said axle for the rotor mounted rotatably relative to a chassis of the apparatus, where
- said axle for the saw blade is arranged substantially parallel to said axle for the rotor, and where said axle for the saw blade is mounted for performing a planetary movement around the axle for the rotor.

12. Method of operating an apparatus for cutting wooden elements, said method comprising the steps of
- rotating the saw blade around an axle of the saw blade by operating a motor driving the axle of the saw blade,
- rotating the saw blade around an axle of a rotor by operating a motor driving the axle of the rotor,
- thereby providing a centre of the saw blade a planetary movement around the axle of the rotor resulting in
- displacing the saw blade from a first position to a second position along the planetary movement,
- cutting a wooden element when the saw blade is in the second position, during the planetary movement,
- displacing the saw blade further from the second position to the first position along the planetary movement.

13. A method according to claim 12, where the step of displacing the saw blade from the first position to the second position is accomplished within a time interval of 0.050 second to 1 second, possibly a time interval of 0.050 seconds to 0.500 seconds, even possibly a time interval of 0.050 to 0.250 seconds, still even possibly a time interval of 0.050 to 0.100 seconds.

14. A method according to claim 12 or claim 13, where the step of cutting a wooden element when the saw blade is in the second position, during the planetary movement, is performed with a saw blade having a diameter of between 200 mm and 600 mm, preferably having a diameter between 300 mm and 500 mm, and is performed on a wooden element having a width between 100 mm and 400 mm, preferably having a width between 150 mm and 300 mm.

15. A method according to claim 12 or claim 13, where the step of cutting a wooden element when the saw blade is in the second position, during the planetary movement, is performed with a saw blade having a diameter of between 200 mm and 600 mm, preferably having a diameter between 300 mm and 500 mm, and is performed on a wooden element having a height between 20 mm and 100 mm, preferably having a height between 25 mm and 75 mm.
